Europäisches Patentamt

European Patent Office

Office européen des brevets

(11) Veröffentlichungsnummer: **0 166 170**
**A2**

(12) **EUROPÄISCHE PATENTANMELDUNG**

(21) Anmeldenummer: 85106044.2

(22) Anmeldetag: 16.05.85

(51) Int. Cl.⁴: **C 02 F 3/20**, C 02 F 11/02

(30) Priorität: **19.05.84 DE 3418730**

(43) Veröffentlichungstag der Anmeldung: **02.01.86**
**Patentblatt 86/1**

(84) Benannte Vertragsstaaten: **AT BE CH FR GB IT LI LU NL SE**

(71) Anmelder: **Schrage, Friedrich, Badenstedter Strasse 98A+B, D-3000 Hannover 91 (DE)**

(72) Erfinder: **Schrage, Friedrich, Badenstedter Strasse 98A+B, D-3000 Hannover 91 (DE)**

(74) Vertreter: **Leine, Sigurd, Dipl.-Ing. et al, LEINE & KÖNIG Patentanwälte Burckhardtstrasse 1, D-3000 Hannover 1 (DE)**

(54) **Einrichtung zur Einleitung von Gas in eine Flüssigkeit oder Suspension, insbesondere Schlammbehandlungseinrichtung.**

(57) Eine Einrichtung zur Einleitung von Gas in eine Flüssigkeit oder Suspension, insbesondere Schlammbehandlungseinrichtung, weist einen Behälter für die Flüssigkeit und einen Submersbelüfter auf. Dem Gaseinlaß des Submersbelüfters ist ein Kompressor vorgeschaltet. Dadurch wird die Anreicherung des Gases in der Flüssigkeit wesentlich erhöht. Es ist möglich, den Submersbelüfter in einer wesentlich größeren Tiefe als bisher anzuordnen und dadurch bei gleicher oder kleiner Bläschengröße die Gasanreicherung weiter zu erhöhen.

LEINE & KÖNIG

PATENTANWALTE

Dipl.-Ing. Sigurd Leine · Dipl.-Phys. Dr. Norbert König

Burckhardtstraße 1          Telefon (05 11) 62 30 05
D-3000 Hannover 1

Friedrich Schrage

Unser Zeichen          Datum

701/1          11. Mai 1984

Einrichtung zur Einleitung von Gas in eine Flüssigkeit
oder Suspension, insb. Schlammbehandlungseinrichtung

Die Erfindung betrifft eine Einrichtung zur Einleitung
von Gas in eine Flüssigkeit oder Suspension gemäß dem Oberbegriff des Anspruchs 1.

Durch die europäische Patentanmeldung Nr. 82810366.3
ist eine Einrichtung der betreffenden Art bekannt, bei der der
Submersbelüfter im oberen Bereich des Behälters angeordnet
ist. Von dem Submersbelüfter aus erstreckt sich ein Behälterteil nach unten, in dem die mit Gas angereicherte Flüssigkeit abwärts strömt, um so die Verweilzeit der kleinen
Gasbläschen zu verlängern und damit den Übergang des Gases
in die Flüssigkeit zu verbessern. Das Maß der Anreicherung
mit Gas ist hierbei jedoch begrenzt, und der Aufwand ist beträchtlich.

Der Erfindung liegt die Aufgabe zugrunde, eine Einrichtung der betreffenden Art zu schaffen, bei der das Maß der
Anreicherung des Gases in der Flüssigkeit wesentlich erhöht
ist und die darüber hinaus einfach im Aufbau und zuverlässig
und störungsfrei im Betrieb ist.

Die der Erfindung zugrundeliegende Aufgabe wird durch
die im Kennzeichen des Anspruchs 1 angegebene Lehre gelöst.

Die Erfindung beruht auf dem Gedanken, den Gasdurchsatz
des Submersbelüfters, der normalerweise das Gas selbst ansaugt, durch eine Aufladung zu erhöhen. Außerdem läßt sich
durch den Grad der Aufladung die Größe der erzeugten Bläschen einstellen.

SL/N          -3-

Von besonderem Vorteil bei der erfindungsgemäßen Lösung ist es, daß der Submersbelüfter in einer wesentlich größeren Tiefe als bisher möglich angeordnet werden kann. Es ist sogar möglich, ihn im Bodenbereich des Behälters anzuordnen, wobei durch entsprechende Erhöhung des Ladedruckes die gewünschte Bläschengröße einstellbar ist. Hinzu kommt, daß wegen des größeren Druckes in größerer Tiefe die erzeugten Gasbläschen bei einer bestimmten Größe mehr Gas enthalten als in geringerer Tiefe, so daß mehr Gas bei gleicher oder kleinerer Bläschengröße einbringbar ist.

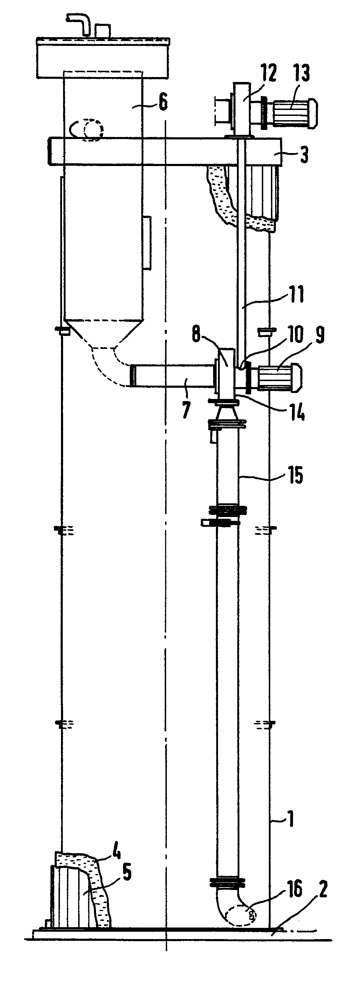

Anhand eines in der Zeichnung dargestellten Ausführungsbeispieles soll die Erfindung näher erläutert werden.

Ein zylindrischer Behälter 1 steht auf einem Fundament 2 und ist oben durch einen Deckel 3 abgedeckt. Der Behälter 1 ist mit einer Wärmeisolierung 4 und einer Ummantelung 5 umgeben, die nur teilweise dargestellt sind.

In Blickrichtung auf die Zeichnung vor dem Behälter 1 ist an diesem ein Zyklon 6 befestigt, dem zu belüftende Flüssigkeit zugeführt wird und aus dem unten diese Flüssigkeit durch eine Leitung 7 einem Submersbelüfter 8, der durch einen Motor 9 angetrieben ist und an dem Behälter 1 befestigt ist, zugeführt wird. Ein Lufteinlaß 10 des Submersbelüfters 8 ist über eine Luftleitung 11 mit einem Kompressor 12 verbunden, der durch einen Motor 13 angetrieben und oberhalb des Deckels 3 befestigt ist.

Von einem Auslaßstutzen 14 des Submersbelüfters 8 führt eine Leitung 15 außen an dem Behälter 1 nach unten und mündet in einer weitgehend tangentialen Öffnung 16 in dem Behälter 1, so daß die durch die Öffnung 16 in den Behälter 1 eintretende Flüssigkeit eine tangentiale Richtung hat und daher die Flüssigkeit in dem Behälter in Rotation versetzt.

Der Submersbelüfter 8 ist in einer Tiefe unterhalb des im wesentlichen im Bereich des Deckels 3 liegenden Flüssigkeitsspiegels angeordnet, die erfindungsgemäß größer sein kann und in diesem Ausführungsbeispiel größer ist als die normale Betriebstiefe des Submersbelüfters. Der Submersbelüfter 8 kann auch unmittelbar im Bodenbereich des Behälters 1 angeordnet sein, so daß die Leitung 15 entfällt und der Auslaßstutzen 14 unmittelbar mit der Öffnung 16 verbunden ist.

Dipl.-Ing. Sigurd Leine · Dipl.-Phys. Dr. Norbert König

Burckhardtstraße 1     Telefon (0511) 62 30 05
D-3000 Hannover 1

Unser Zeichen        Datum

Friedrich Schrage                701/1    11. Mai 1984

A n s p r ü c h e :

1. Einrichtung zur Einleitung von Gas in eine Flüssigkeit
oder Suspension, insbesondere Schlammbehandlungseinrichtung,
mit einem Behälter für die Flüssigkeit und mit einem Submersbelüfter, d a d u r c h  g e k e n n z e i c h n e t, daß
dem Gaseinlaß (10) des Submersbelüfters (8) ein Kompressor (12)
vorgeschaltet ist.

2. Einrichtung nach Anspruch 1, d a d u r c h  g e k e n n -
z e i c h n e t,  daß der Submersbelüfter (8) in einer Tiefe
unterhalb des Flüssigkeitsspiegels in dem Behälter (1) angeordnet ist, die größer als die maximale Arbeitstiefe des Submersbelüfters (8) ohne Aufladung durch einen Kompressor (12)
ist.

3. Einrichtung nach Anspruch 1, d a d u r c h  g e k e n n -
z e i c h n e t,  daß der Submersbelüfter (8) im Bodenbereich
des Behälters (1) angeordnet ist.

0166170